# EUROPÄISCHE PATENTANMELDUNG

(11) **EP 3 406 951 A1**
(43) Veröffentlichungstag der Anmeldung: **28.11.2018**
(21) Anmeldenummer: 17172726.6
(22) Anmeldetag: 24.05.2017
(51) Int. Cl.: F16K 49/00, F01D 9/06, F01D 17/14, F01D 25/12, F01D 25/26

(54) **KÜHLUNGSANORDNUNG ZUM KÜHLEN EINER ÜBERWURFMUTTER FÜR EIN VENTIL EINER DAMPFTURBINE**

(71) Anmelder: Siemens Aktiengesellschaft, 80333 München (DE)
(72) Erfinder: Zander, Uwe, 45475 Mülheim an der Ruhr (DE)

(57) **Zusammenfassung**

Die Erfindung betrifft eine Kühlungsmöglichkeit für eine Überwurfmutter (17), die eine Verbindung zwischen einem Ventilstutzen (14) und einem Gehäusestutzen (8) herstellt, wobei eine Druckluft durch einen Ringkanal (21), der zwischen der Überwurfmutter (17) und dem Ventilstutzen (14) angeordnet ist, ausgebildet ist.

## Beschreibung

Die Erfindung betrifft eine Kühlungsanordnung zum Kühlen einer Überwurfmutter, umfassend ein Ventilgehäuse mit einem Ventilstutzen, durch den ein Strömungsmedium strömbar ist, ein Strömungsmaschinengehäuse mit einem Gehäusestutzen, durch den ein Strömungsmedium strömbar ist, wobei der Ventilstutzen am Gehäusestutzen anliegt, so dass eine strömungstechnische Verbindung zwischen dem Ventilstutzen und dem Gehäusestutzen entsteht, umfassend eine Überwurfmutter, die im Betriebszustand mittels eines Gewindes eine Kraft von dem Ventilstutzen in Richtung Gehäusestutzen ausübt, wobei zwischen dem Ventilstutzen und der Überwurfmutter ein Ringkanal ausgebildet ist.

In Kraftwerken zur Erzeugung elektrischer Energie werden in der Regel Gas- und Dampfturbinen eingesetzt. Ein wesentliches Merkmal von Dampfkraftwerken ist es, dass ein Strömungsmedium, hier Dampf, über Leitungen in eine Dampfturbine geleitet wird. Da die Zustandsgrößen eines Frischdampfes bei über 600°C und 350bar liegen können, sind erhöhte technische Anforderungen an die Leitungen, insbesondere an die Materialien gestellt.

Eine Dampfturbine als Ausführungsform einer Strömungsmaschine umfasst einen Strömungskanal, der über einen Gehäusestutzen strömungstechnisch mit einem Ventil verbunden ist. Das Ventil wird mittels einer Überwurfmutter mit dem Gehäusestutzen befestigt. Aufgrund der hohen Temperaturen wird eine Überwurfmutter thermisch besonders stark belastet. Daher wird die Überwurfmutter im Hinblick auf die zu erwartenden Temperaturen entsprechend den Erfordernissen ausgelegt. Eine Möglichkeit den erhöhten Erfordernissen hinsichtlich der hohen Temperaturen zu genügen, werden bessere Werkstoffe, die der thermischen Belastung standhalten, berücksichtigt. Allerdings sind diese Werkstoffe vergleichsweise teuer, was zu höheren Kosten führt. Andererseits führen unterschiedliche Materialien, die im Gehäusestutzen und im Ventil benutzt werden zu unterschiedlichen Ausdehnungskoeffizienten, was letztlich zu weiteren technischen Problemen führt.

Die Erfindung möchte hier Abhilfe schaffen und eine Möglichkeit anbieten, die Überwurfmutter geeignet zu kühlen.

Gelöst wird diese Aufgabe durch eine Kühlungsanordnung zum Kühlen einer Überwurfmutter, umfassend ein Ventilgehäuse mit einem Ventilstutzen, durch den ein Strömungsmedium strömbar ist, ein Strömungsmaschinengehäuse mit einem Gehäusestutzen, durch den ein Strömungsmedium strömbar ist, wobei der Ventilstutzen am Gehäusestutzen anliegt, so dass eine strömungstechnische Verbindung zwischen dem Ventilstutzen und dem Gehäusestutzen entsteht, umfassend eine Überwurfmutter, die im Betriebszustand mittels eines Gewindes eine Kraft von dem Ventilstutzen in Richtung Gehäusestutzen ausübt, wobei zwischen dem Ventilstutzen und der Überwurfmutter ein Ringkanal ausgebildet ist, wobei der Ringkanal eine Zuströmöffnung zum Zuströmen eines Kühlungsmediums und eine Anströmöffnung zum Ausströmen des Kühlungsmediums aufweist.

Die Aufgabe wird ebenfalls durch ein Verfahren zur Kühlung einer Überwurfmutter, bei dem ein Ventilstutzen an einen Gehäusestutzen einer Strömungsmaschine, insbesondere Dampfturbine, befestigt wird, wobei zwischen dem Ventilstutzen und der Überwurfmutter ein Ringkanal ausgebildet wird, durch das ein Kühlungsmedium, insbesondere Druckluft, strömt.

Die Verwendung artgleich dehnender Materialien ist sinnvoll und kann zu einer besseren Ausnutzung der Werkstoffe über geeignete Absenkung der Temperatur führen. Da die Überwurfmutter nicht direkt mit dem Dampf in Wechselwirkung steht, sondern nur über Strahlung und Wärmeleitung ihre Betriebstemperatur erlangt und sie zudem von außen vergleichsweise leicht zugänglich ist, kann sie mit Hilfe eines Kühlmediums und dessen Einleitung in die zu kühlenden Bereiche zu einer deutlichen Temperaturabsenkung im Betrieb führen. Dieser Effekt wird verstärkt, wenn zusätzliche Strahlungsbarrieren den Kühlungseffekt verstärken. Erfindungsgemäß werden daher auch Au-ßenbeschichtungen auf einem Ventilflansch vorgeschlagen, die im Betrieb strahlungstechnisch eine Art Abschirmfunktion darstellen. Dies kann beispielsweise durch dünne metallische Blechhülsen realisiert werden.

Vorteilhafte Weiterbildungen sind in den Unteransprüchen angegeben.

Mit der Erfindung wird somit vorgeschlagen, zwischen dem Ventilstutzen und der Überwurfmutter ausreichend Platz zu generieren, um einen Ringkanal auszubilden, durch den ein Kühlungsmedium wie z. B. Druckluft hindurchströmen kann. Die Druckluft kühlt sowohl den Ventilstutzen als auch die Überwurfmutter.

In einer vorteilhaften Weiterbildung wird die Zuströmöffnung im Bereich einer 6-Uhr-Position angeordnet. Somit kann die Druckluft mit einem entsprechenden Druck und Strömungsgeschwindigkeit den Ringkanal optimal beströmen und wird vorteilhafterweise in einer 12-Uhr-Position ausgeleitet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Im Hinblick auf Ergänzungen der in der Zeichnung unmittelbar erkennbaren Lehren, wird auf den einschlägigen Stand der Technik verwiesen.

Es zeigen:
- Figur 1: eine Schnittdarstellung durch eine erfindungsgemäße Kühlungsanordnung,
- Figur 2: eine Schnittdarstellung in Strömungsrichtung der erfindungsgemäßen Kühlungsanordnung,
- Figur 3: eine alternative Darstellung der Kühlungsanordnung.

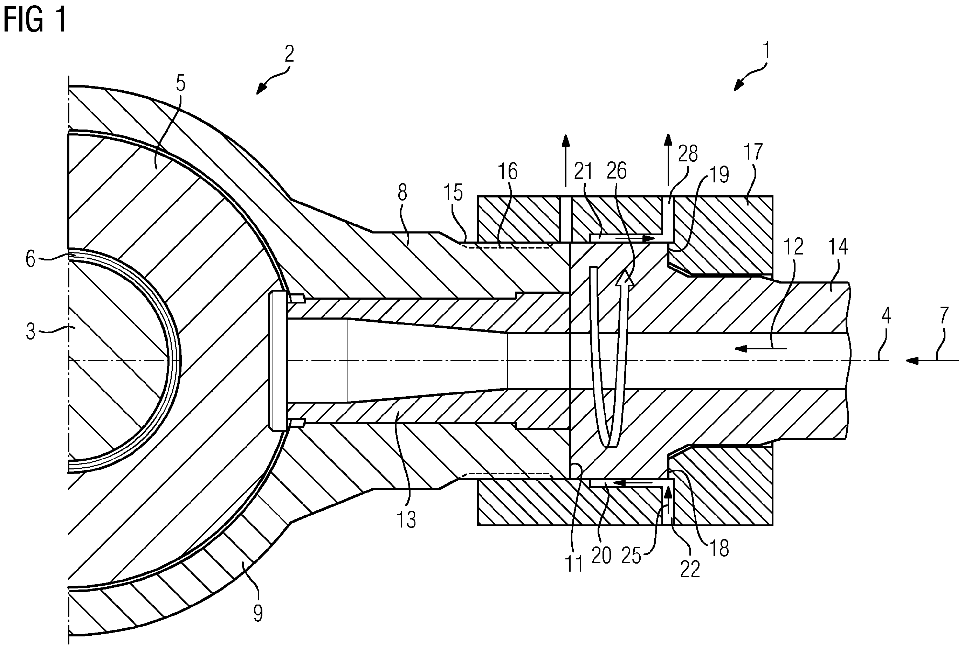

Die Figur 1 zeigt eine Kühlungsanordnung 1. Eine Dampfturbine 2 als Ausführungsform einer Strömungsmaschine umfasst einen Rotor 3, der mit Laufschaufeln (nicht dargestellt) versehen ist und um eine Rotationsachse 4 rotierbar angeordnet ist.

Um den Rotor 3 ist ein Innengehäuse 5 angeordnet, wobei das Innengehäuse 5 Leitschaufeln (nicht dargestellt) umfasst. Zwischen dem Rotor 3 und dem Innengehäuse 5 ist ein Strömungskanal 6 ausgebildet, durch den im Betrieb ein Strömungsmedium, hier Dampf, strömt. Die thermische Energie des Dampfes wird hierbei in Rotationsenergie des Rotors 3 umgewandelt. Der Dampf wird über eine Leitung 7 in die Dampfturbine 2 geführt. Dazu wird die Dampfturbine 2 mit einem Gehäusestutzen 8 ausgeführt. Der Gehäusestutzen 8 ist Teil eines Strömungsmaschinengehäuses 9. In dem in Figur 1 dargestellten Ausführungsbeispiel ist das Strömungsmaschinengehäuse 9 ein Außengehäuse, das um das Innengehäuse 5 angeordnet ist.

Der Gehäusestutzen 8 weist eine Anlegefläche 11 auf. Ein Dampf strömt entlang eine Dampfströmungsrichtung 12 in den Strömungskanal 6 der Dampfturbine 2. Innerhalb des Gehäusestutzens 8 ist ein Strömungsdiffusor 13 eingelegt. Im Betrieb strömt ein vergleichsweise heißer Dampf entlang der Dampfströmungsrichtung 12 in den Strömungskanal 6.

An den Gehäusestutzen 8 ist ein Ventilstutzen 14 angelegt. Der Ventilstutzen 14 ist Teil eines Ventilgehäuses, durch den ein Strömungsmedium entlang der Dampfströmungsrichtung 12 strömbar ist. Der Ventilstutzen 14 wird derart an den Gehäusestutzen 8 angelegt, dass eine strömungstechnische Verbindung zwischen dem Ventilstutzen 14 und dem Gehäusestutzen 8 ausgebildet ist. An einen äußeren Umfang 15 des Gehäusestutzens 8 ist ein Gewinde 16 angeordnet. In das Gewinde 16 greift eine Überwurfmutter 17 ein. Im Betriebszustand entsteht eine Kraft von dem Ventilstutzen 14 in Richtung des Gehäusestutzens 8. Dazu weist der Ventilstutzen 14 eine Anlagefläche 18 auf. Die Anlagefläche 18 weist einen größeren Radius als der stromauf liegende Bereich des Ventilstutzens 14 auf. An diese Anlagefläche 18 liegt eine Kontaktfläche 19 der Überwurfmutter 17 an.

Zwischen der Überwurfmutter 17 und dem Ventilstutzen 14 ist im Bereich der Anlagefläche 18 ein Abstand 20 ausgebildet. Dieser Abstand 20 führt zu einem Ringkanal 21, der sich über den Umfang des Ventilstutzens 14 erstreckt. In diesen Ringkanal 21 strömt ein Kühlungsmedium, beispielsweise Druckluft. Dazu wird die Überwurfmutter 17 mit einer Zuströmöffnung 22 ausgebildet, die in einer 6-Uhr-Position 23 angeordnet ist.

In einer alternativen Ausführungsform kann die Zuströmöffnung 22 in einer 8-Uhr-Position 24 angeordnet sein. Die Strömungsrichtung der Druckluft wird durch den Pfeil 25 dargestellt. Der Pfeil 26 stellt die Bewegung der Druckluft von der 6-Uhr-Position 23 nach oben zu einer 12-Uhr-Position 27 dar. In der 12-Uhr-Position 27 ist eine Ausströmöffnung 28 angeordnet. Die Ausströmöffnung 28 ist zum Ausströmen der Druckluft ausgebildet.

Die Zuströmöffnung 22 ist mit einem nicht näher dargestellten Druckluftgerät strömungstechnisch verbunden, um Druckluft als Kühlungsmedium in den Ringkanal 21 zu leiten.

Der Gehäusestutzen 8 und der Ventilstutzen 14 sind aus dem gleichen Material ausgebildet.

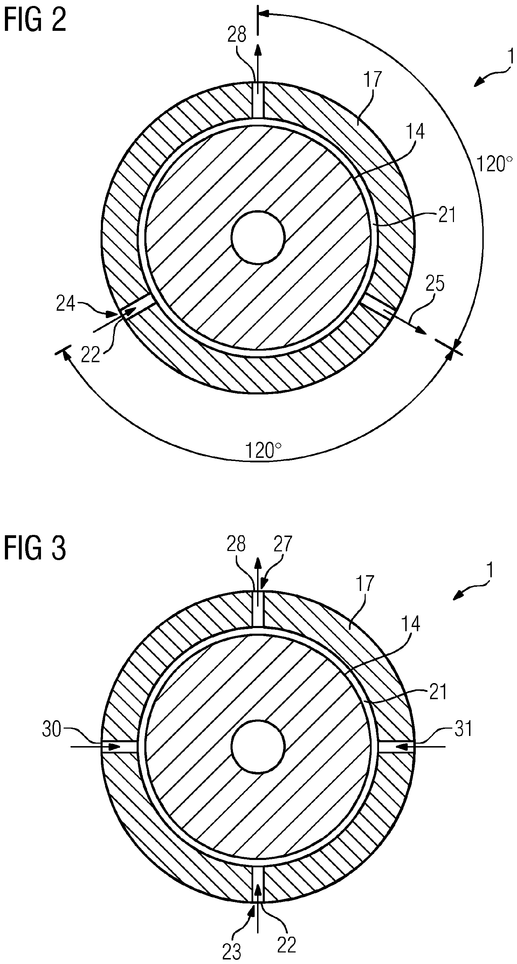

Die Figuren 2 und 3 zeigen eine Schnittdarstellung in der Dampfströmungsrichtung 12 gesehen. In der in Figur 2 dargestellten Ausführungsform ist die Zuströmöffnung 22 in der 8-Uhr-Position 24 angeordnet. Die Ausströmöffnung 28 ist in der 12-Uhr-Position 27 angeordnet.

In einer alternativen Ausführungsform kann eine weitere Ausströmöffnung in der 4-Uhr-Position angeordnet sein.

In der in Figur 3 dargestellten Ausführungsform ist die Zuströmöffnung 22 in der 6-Uhr-Position 23 angeordnet. Weitere Zuströmöffnungen 30 und 31 können in der 3-Uhr-Position und/oder 9-Uhr-Position angeordnet sein. In der 12-Uhr-Position 27 ist die Ausströmöffnung 28 angeordnet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Kühlungsanordnung (1)
zum Kühlen einer Überwurfmutter (17),
umfassend
ein Ventilgehäuse mit einem Ventilstutzen (14), durch den ein Strömungsmedium strömbar ist,
ein Strömungsmaschinengehäuse (9) mit einem Gehäusestutzen (8), durch den ein Strömungsmedium strömbar ist,
wobei der Ventilstutzen (14) am Gehäusestutzen (8) anliegt, so dass eine strömungstechnische Verbindung zwischen dem Ventilstutzen (14) und dem Gehäusestutzen (8) entsteht, umfassend eine Überwurfmutter (17), die im Betriebszustand mittels eines Gewindes (16) eine Kraft von dem Ventilstutzen (14) in Richtung Gehäusestutzen (8) ausübt,
wobei zwischen dem Ventilstutzen (14) und der Überwurfmutter (17) ein Ringkanal (21) ausgebildet ist,
**dadurch gekennzeichnet, dass**
der Ringkanal (21) eine Zuströmöffnung (22) zum Zuströmen eines Kühlungsmediums und eine Anströmöffnung (28) zum Ausströmen des Kühlungsmediums aufweist.

2. Kühlungsanordnung (1) nach Anspruch 1,
wobei die Zuströmöffnung (22) im Bereich einer 6-Uhr-Position (23) angeordnet ist.

3. Kühlungsanordnung (1) nach Anspruch 1 oder 2,
wobei die Ausströmöffnung (28) im Bereich einer 12-Uhr-Position (27) angeordnet ist.

4. Kühlungsanordnung (1) nach Anspruch 1, 2 oder 3,
wobei die Zuströmöffnung (22) mit einem Druckluftgerät strömungstechnisch verbunden ist, um Druckluft als Kühlungsmedium in den Ringkanal (21) zu leiten.

5. Kühlungsanordnung (1) nach einem der vorhergehenden Ansprüche,
wobei das Gewinde (16) auf dem Gehäusestutzen (8) anordnet ist.

6. Kühlungsanordnung (1) nach einem der vorhergehenden Ansprüche,
wobei der Gehäusestutzen (8) und der Ventilstutzen (14) das gleiche Material aufweisen.

7. Verfahren zur Kühlung einer Überwurfmutter (17), bei dem ein Ventilstutzen (14) an einen Gehäusestutzen (8) einer Strömungsmaschine, insbesondere Dampfturbine (2), befestigt wird, wobei zwischen dem Ventilstutzen (14) und der Überwurfmutter (17) ein Ringkanal (21) ausgebildet wird, durch den ein Kühlungsmedium, insbesondere Druckluft, strömt.

8. Verfahren nach Anspruch 7,
wobei die Überwurfmutter (17) mit einer Zuströmöffnung (22) in der 6-Uhr-Position (23) und einer Anströmöffnung (28) in der 12-Uhr-Position (27) ausgebildet ist.
